# EUROPEAN PATENT SPECIFICATION

(11) **EP 3 918 131 B1**
(45) Date of publication and mention of the grant of the patent: **22.10.2025**
(21) Application number: 20704076.7
(22) Date of filing: 23.01.2020
(51) Int. Cl.: D21H 11/18, D21H 17/20, D21H 17/67, D21H 17/70, D21H 23/48, D21H 23/50, D21H 27/10, D21H 27/32, D21H 27/38

(54) **A PAPERBOARD AND A METHOD OF PRODUCING A PAPERBOARD**
PAPPE UND VERFAHREN ZUR HERSTELLUNG EINER PAPPE
CARTON ET PROCÉDÉ DE PRODUCTION D'UN CARTON

(30) Priority: 28.01.2019 SE 1950097
(43) Date of publication of application: 08.12.2021
(73) Proprietor: Stora Enso Oyj, 00101 Helsinki (FI)
(72) Inventor: PENG, Frank, 66341 Hammarö (SE); BACKFOLK, Kaj, 53100 Villmanstrand (FI); HEISKANEN, Isto, 55100 Imatra (FI); LAUKALA, Teija, 53850 Lappeenranta (FI)
(74) Representative: Steinrud, Henrik
(86) International application number: PCT/IB2020/050509
(87) International publication number: WO 2020/157609

(56) References cited:
- EP-A1- 2 622 133
- WO-A1-2014/029917
- TW-B- I 579 428
- US-A1- 2011 088 860
- US-A1- 2016 194 527

## Description

### Technical field

The present invention relates to a linerboard with improved optical properties, a corrugated fiberboard comprising such linerboard and a method of producing such a linerboard.

### Background

Paperboard is a packaging material which can be converted to different types of packaging solutions depending on the end-use. Typical paperboard grades are Folding Boxboard (FBB), Solid Bleached Board (SBB), Liquid Packaging Board (LPB) and container board to be used in corrugated board. Corrugated board comprises a corrugated medium (fluting) and at least one flat liner or linerboard attached onto a surface of the fluted medium, thus forming a sandwich structure. There are different kinds of corrugated board qualities, and these might comprise different types of liners and corrugated mediums. Examples of different types of liners are kraftliner, white top linerboard and testliner. White top linerboard is used when high quality printing is required. Typically, white top linerboard has a multi-ply structure with one or several base boards comprising unbleached chemical or semi-chemical pulp and a top ply comprising bleached chemical pulp. The top ply may further be coated with mineral based coating.

Paperboard is typically subjected to printing and converting processes to provide a packaging suitable for the end use. The requirement of a good printing surface puts high demands on the appearance of the paperboard. Brightness and opacity are important properties. To improve the white appearance of paperboard, the paperboard manufacturer has traditionally been forced to use pigment coating or a top ply comprising bleached pulp having a high grammage. Environmental concerns have increased the demand for paperboards with lighter weight, thus consuming less raw material.

US2007202347 discloses a two-ply linerboard, wherein an intermediate layer comprising pigments and starch is applied between the layers. In the linerboard described in this publication, a portion of the applied pigment components of the intermediate layer migrate into the top ply and into the base ply, which reduces the optical effect of the pigments.

EP2622133 and WO2014/029917 relate to multilayer papers comprising microfibrous cellulose in the middle layer and high amount of fillers, such as precipitated calcium carbonate.

There remains a need for a light weight paperboard with improved optical properties.

### Description of the invention

It is an object of the present invention to provide a lightweight paperboard which exhibits improved optical properties and an improved stretchability.

The invention is defined by the appended independent claims. Embodiments are set forth in the appended dependent claims.

According to a first aspect, the invention discloses a paperboard, which paperboard comprises at least one base ply, a top ply, and an intermediate layer disposed in-between the at least one base ply and the top ply, wherein the wherein the intermediate layer comprises pigment and microfibrillated cellulose (MFC).

The application of an intermediate layer comprising pigments and MFC in-between the base ply and the top ply gives rise to improved optical properties of the paperboard, even when using an uncoated top ply having a low grammage. This makes it possible to reduce the grammage of the top ply and still obtain good optical properties. Without wishing to be bound to any theory, it is believed that MFC improves the retention of the pigments and that substantially no migration of the pigments into the top or base ply takes place. The invention further reduces the need for chemical retention agents. In addition, the stretchability of the paperboard is improved, whereby cracks at the converting of the board may be diminished.

Microfibrillated cellulose (MFC) shall in the context of the patent application mean a nano scale cellulose particle fiber or fibril with at least one dimension less than 100 nm. MFC comprises partly or totally fibrillated cellulose or lignocellulose fibers. The liberated fibrils have a diameter less than 100 nm, whereas the actual fibril diameter or particle size distribution and/or aspect ratio (length/width) depends on the source and the manufacturing methods.

The smallest fibril is called elementary fibril and has a diameter of approximately 2-4 nm (see e.g. Chinga-Carrasco, G., Cellulose fibres, nanofibrils and microfibrils,: The morphological sequence of MFC components from a plant physiology and fibre technology point of view, Nanoscale research letters 2011, 6:417), while it is common that the aggregated form of the elementary fibrils, also defined as microfibril (Fengel, D., Ultrastructural behavior of cell wall polysaccharides, Tappi J., March 1970, Vol 53, No. 3*.),* is the main product that is obtained when making MFC e.g. by using an extended refining process or pressure-drop disintegration process. Depending on the source and the manufacturing process, the length of the fibrils can vary from around 1 to more than 10 micrometers. A coarse MFC grade might contain a substantial fraction of fibrillated fibers, i.e. protruding fibrils from the tracheid (cellulose fiber), and with a certain amount of fibrils liberated from the tracheid (cellulose fiber).

There are different acronyms for MFC such as cellulose microfibrils, fibrillated cellulose, nanofibrillated cellulose, fibril aggregates, nanoscale cellulose fibrils, cellulose nanofibers, cellulose nanofibrils, cellulose microfibers, cellulose fibrils, microfibrillar cellulose, microfibril aggregrates and cellulose microfibril aggregates. MFC can also be characterized by various physical or physical-chemical properties such as large surface area or its ability to form a gel-like material at low solids (1-5 wt%) when dispersed in water. The cellulose fiber is preferably fibrillated to such an extent that the final specific surface area of the formed MFC is from about 1 to about 300 m²/g, such as from 1 to 200 m²/g or more preferably 50-200 m²/g when determined for a freeze-dried material with the BET method.

Various methods exist to make MFC, such as single or multiple pass refining, pre-hydrolysis followed by refining or high shear disintegration or liberation of fibrils. One or several pre-treatment step is usually required in order to make MFC manufacturing both energy efficient and sustainable. The cellulose fibers of the pulp to be supplied may thus be pre-treated enzymatically or chemically, for example to reduce the quantity of hemicellulose or lignin. The cellulose fibers may be chemically modified before fibrillation, wherein the cellulose molecules contain functional groups other (or more) than found in the original cellulose. Such groups include, among others, carboxymethyl (CM), aldehyde and/or carboxyl groups (cellulose obtained by N-oxyl mediated oxydation, for example "TEMPO"), or quaternary ammonium (cationic cellulose). After being modified or oxidized in one of the above-described methods, it is easier to disintegrate the fibers into MFC or nanofibrillar size fibrils.

The nanofibrillar cellulose may contain some hemicelluloses; the amount is dependent on the plant source. Mechanical disintegration of the pre-treated fibers, e.g. hydrolysed, pre-swelled, or oxidized cellulose raw material is carried out with suitable equipment such as a refiner, grinder, homogenizer, colloider, friction grinder, ultrasound sonicator, fluidizer such as microfluidizer, macrofluidizer or fluidizer-type homogenizer. Depending on the MFC manufacturing method, the product might also contain fines, or nanocrystalline cellulose or e.g. other chemicals present in wood fibers or in papermaking process. The product might also contain various amounts of micron size fiber particles that have not been efficiently fibrillated.

MFC is produced from wood cellulose fibers, both from hardwood or softwood fibers. It can also be made from microbial sources, agricultural fibers such as wheat straw pulp, bamboo, bagasse, or other non-wood fiber sources. It is preferably made from pulp including pulp from virgin fiber, e.g. mechanical, chemical and/or thermomechanical pulps. It can also be made from broke or recycled paper.

The above described definition of MFC includes, but is not limited to, the new proposed TAPPI standard W13021 on cellulose nanofibril (CMF) defining a cellulose nanofiber material containing multiple elementary fibrils with both crystalline and amorphous regions.

Paperboard generally relates to strong, thick paper or cardboard used for boxes and other types of packaging. Paperboard is made from bleached or unbleached chemical and/or mechanical cellulose pulp and may be coated or un-coated. The paperboard may have a grammage of between 100 - 400 gsm or between 150 - 300 gsm depending on the end use requirements. The paperboard of the invention is a multiply paperboard comprising at least a base ply and a top ply. In one embodiment, the top ply comprises 100wt% bleached pulp. The multiply paperboard may further comprise several base plies, e.g. a back ply and one or several middle plies. A paperboard ply, such as the base ply and the top ply as used herein refers to a paperboard layer comprising cellulose fibers comprising at least 50 wt% cellulose fibers, or at least 70 wt% or 80 wt% cellulose fibers calculated on the total weight of said ply. The paperboard is linerboard, most preferably a white top linerboard and most preferably uncoated white top linerboard. The paperboard may be further mineral-, dispersion-, or wax coated with one or several layers, surface sized, pigmented or polymer coated in one or several layers depending on the end-use.

In some embodiments of the invention, the intermediate layer further comprises a co-binder comprising a water soluble polymer. The water soluble polymer may be chosen from the group of starch, preferably uncooked starch, or partly or fully gelatinzed starch, PolyDADMAC, APAM, CPAM, PVA, CMC or other cellulose derivatives and combinations thereof. Such co-binders improve the interply adhesion. In some embodiments, the water soluble polymers might be non-fossil based water soluble polymers. In some embodiments, the water soluble polymer may be a non-fossil based water soluble polymer, such as starch, cellulose derivatives, protein or hemicellulose.

The intermediate layer comprises MFC in an amount of 30 - 90 wt%, preferably in an amount of 50 - 90 wt% or 60 - 80 wt%, pigments in an amount of 10 - 70 wt%, preferably in an amount 20 - 40 wt% and the optional co-binder in an amount of 0 - 50 wt%, or 0 - 30 wt% or 0 - 10 wt% as calculated on the total weight of said intermediate layer. The intermediate layer may consist of MFC, pigments and the optional co-binder. Preferably, the intermediate layer comprises substantially no fibers. The intermediate layer may contain further additives, preferably in an amount of 0 - 20 wt% or 0.1 - 20 wt% or 0 - 10 wt% or 0.1 - 10 wt%, including e.g. dyes or other optical agents such as optical brighteners, lignin or UV absorbers, a bulking agent such as a bulky fiber, expandable plastic particles, microcrystalline cellulose and/or structuring particles.

The grammage of the intermediate layer is preferably in the range of 0.1 - 30 gsm, preferably 0.2 - 20 gsm or most preferably 0.5 - 15 gsm. The grammage, also sometimes referred to as "basis weight", may be measured according to ISO 536.

The pigment in the intermediate layer is precipitated calcium carbonate (PCC).

In some embodiments, the pigment comprises pigment particles wherein 90 % by volume of said pigment particles have a diameter of less than 5 µm, preferably below 3 µm, most preferably of below 1 µm. The particle size distribution as used herein is determined using dry laser diffraction method, preferably by use of a Malvern Mastersizer 3000 Laser Diffraction System from the company Malvern, UK.

In some embodiments, the PCC pigment and MFC in the intermediate layer are in the form of PCC-MFC complexes wherein the PCC is precipitated onto fibers or fibrils of the MFC. In this embodiment, the retention of the pigments is even further improved. Such PCC-MFC complexes may be produced by carbonation of calcium hydroxide to form precipitated calcium carbonate in the presence of MFC. MFC can e.g. be mixed with an aqueous solution of Ca(OH)2, i.e. milk of lime, whereupon carbon dioxide is introduced to the mixture whereby PCC is at least partly precipitated onto fibers or fibrils of the MFC, forming a PCC/MFC complex. Alternatively, the MFC, milk of lime and carbon dioxide can be added simultaneously to a reactor in a continuous process. Additives, such as salts and morphology controlling agents, can be present during the carbonation process. Additives may e.g. be chosen from the group of magnesium hydroxide, sodium hydroxide and ammonium hydroxide or mixtures thereof. The CaCO3 can crystallize in one or several polymorphs, such of one of the following: calcite, aragonite, vaterite, calcium carbonate monohydrate, calcium carbonate hexahydrate and amorphous material. It is also thus possible that the metastable amorphous calcium carbonate is formed. The PCC may have different morphologies such as rhombohedral, truncated prismatic, scalenohedral, trigonal, orthorhombic/needle and hexagonal crystal systems spheroidal or chain-like agglomerates. It can also be a mixture of two or several morphologies. In alternative processes, the precipitation process can also be started from other raw materials such as salts giving rise to PCC-MFC complexes.

In some embodiments, the PCC pigment is precipitated onto starch granules to form PCC-starch. The starch granules may be gelatinized or swollen. Such PCC-starch complexes can be produced by carbonation of calcium hydroxide to form precipitated calcium carbonate in the presence of uncooked starch. Uncooked starch can e.g. be premixed with milk of lime, whereupon carbon dioxide is introduced to the mixture whereby PCC is at least partly precipitated onto the starch granules. Alternatively, the starch, milk of lime and carbon dioxide may be added simultaneously to the reactor in a continuous process. The pigment may comprise a mixture of PCC-MFC complexes and PCC-starch complexes. In some embodiments, the precipitation of PCC is performed in the presence of MFC together with at least of one of the following: starch, cellulose derivatives such as CMC and/or PVOH.

In some embodiments, the BET specific surface area of the PCC-MFC complexes and/or the PCC-starch complexes is above 5 m²/g, preferably above 10 or above 15 m²/g or most preferably above 30 m²/g, such as between 5 -500 m²/g, or 10 - 350 m²/g, or 15 - 100 m²/g, or 30 - 100 m²/g, as measured using nitrogen and the BET method according to ISO 9277.

The invention is in linerboard production. In one embodiment, the top ply of the linerboard comprises 100wt% bleached chemical pulp. In one embodiment, the paperboard is a linerboard and the at least one base ply comprises 50 - 100 wt% unbleached chemical pulp and 50 - 100 wt% unbleached CTMP pulp or recycled pulp and wherein the top ply comprises 100 wt% bleached chemical pulp of hardwood or softwood fibers, all percentages calculated on the total weight of the said ply.

The invention enables the linerboard producer to reduce the grammage of the top ply and still achieve a linerboard having a high brightness and which exhibits a low white top mottling. In some embodiments, the grammage of the top ply is below 70 gsm, preferably below 60, and most preferably below 55 gsm, or below 50 gsm, the grammage of the top ply may be between 10 - 70 gsm, or 20 - 60, or 20 - 55 gsm or 30 - 50 gsm.

The linerboard, may further exhibit a brightness of at least 70 %, preferably at least 75% or at least 80 % or even at least 85 % as measured according to ISO2470-1. The brightness measures the amount of reflectance of blue light. The brightness as expressed herein is measured in accordance with ISO 2470-1.

The linerboard may further exhibit a white top mottling of less than 0.9 %, preferably less than 0.7 % and most preferably less than 0.5 %. White top mottling refers to reflectance variation of unprinted board and is measured using the STFI-Mottling Light v1.0 in accordance with the following: A flatbed scanner is used to collect images and the data is calibrated to reflectance using a calibration set. Small and large scale variations are removed using frequency analysis. The reflectance variations are presented as Coefficient of Variations (COV) divided into wavelength classes. The reflectance variation from 1 to 8 mm are combined into one single mottle

According to a second aspect illustrated herein, there is provided a corrugated fiberboard comprising a corrugated medium and the paperboard defined as set out above with reference to the first aspect as a linerboard. The corrugated board may e.g. comprise three layers: the linerboard of the invention as the outer liner, a corrugated medium such as a semi-chemical fluting, and a kraft liner as the inner liner. The corrugated board may further comprise additional corrugated mediums and liners in several layers. According to a third aspect illustrated herein, there is provided a method to produce a paperboard comprising the steps of forming a base ply, applying a mixture comprising pigments and MFC on the surface of said base ply forming an intermediate layer and applying a top ply on the surface of the intermediate layer. The method to produce a paperboard according to the third aspect of the invention may be further defined by the features of the paperboard according to the first aspect of the invention.

The paperboard of the invention may be made on a conventional paperboard or a linerboard machine, preferably by use of a Fourdrinier machine. The base ply or plies and the top ply may be individually formed by use of several headboxes and several fourdriniers. In this embodiment, the mixture comprising pigments and MFC may be applied on the surface of said base ply on the forming section before the application of the top ply. The mixture may be applied on the base ply when said base ply has a solid content of between 1 - 60, or preferably between 3 - 15 %.

The mixture comprising pigments and MFC is preferably applied on the surface of the base ply by use of a non-impact application method such as curtain coating or spraying. The most preferred application method is curtain coating, which has shown to give the most even coverage. The coating can be applied in a single step or in several step forming a multilayer coating. In embodiments, the coating is applied in several layers using a multilayer curtain coater. The solid content of the mixture is preferably between 0.5 - 50 wt% or more preferably between 1 - 40 wt%, or between 2 - 30 wt%.

In an alternative method, a multiply headbox may be used to form both the base ply, the top ply and the intermediate layer.

## Claims

1. A linerboard comprising at least one base ply, a top ply and an intermediate layer applied in-between the at least one base ply and said top ply, wherein said base ply and said top ply are paperboard plies comprising at least 50 wt% cellulose fibers calculated on the total weight of said ply, wherein the intermediate layer comprises microfibrillated cellulose (MFC) in an amount of 30 - 90 wt%, and precipitated calcium carbonate (PCC) pigment in an amount of 10 - 70 wt%, as calculated on the total weight of said intermediate layer, which pigment comprises pigment particles, wherein 85 % by volume of the pigment particles have a diameter of less than 5 µm.

2. A linerboard according to any one of claims 1, wherein the intermediate layer further comprises a co-binder, which co-binder comprises a water soluble polymer.

3. A linerboard according to 2, wherein the intermediate layer comprises the co-binder in an amount of 0 - 10 wt% as calculated on the total weight of said intermediate layer.

4. A linerboard according to anyone of the preceding claims wherein the grammage of the intermediate layer is in the range of 0.1 - 30 gsm.

5. A linerboard according to anyone of the preceding claims, wherein the pigment comprises PCC-MFC complexes formed by PCC being precipitated onto fibers or fibrils of the microfibrillated cellulose.

6. A linerboard according to anyone of the preceding claims, wherein the pigment comprises PCC-starch complexes in which the PCC is precipitated onto starch granules.

7. A linerboard according to any one of claims 5 or 6, wherein the BET specific surface area of the pigment complexes is above 5 m²/g according to ISO 9277.

8. A linerboard according to anyone of the preceding claims, wherein the at least one base ply comprises 50 - 100 wt% unbleached chemical pulp and 50 - 100 wt% unbleached CTMP pulp or recycled pulp and wherein the top ply comprises 100 wt% bleached chemical pulp of hardwood or softwood fibers, all percentages calculated on the total weight of the said ply.

9. A linerboard according to any one of the claims 10 - 11, wherein the grammage of the top ply is below 60 gsm.

10. A linerboard according to claim 12, which linerboard exhibits a Brightness of at least 70 % measured according to ISO2470-1

11. A linerboard according to any one the preceding claims which linerboard exhibits a white top mottling of less than 0.9 %.

12. A corrugated fiberboard comprising a linerboard according to any one of claims 1 - 9 and a corrugated medium.

13. A method to produce a linerboard comprising the steps of:
- forming a base ply;
- applying a mixture comprising precipitated calcium carbonate (PCC) pigment comprising pigment particles whereof 85% by volume have a diameter of less than 5_µm and microfibrillated cellulose on the surface of said base ply forming an intermediate layer;
- applying a top ply on the surface of the intermediate layer
- wherein the formed intermediate layer comprises the microfibrillated cellulose in an amount of 30 - 90 wt%, and the precipitated calcium carbonate (PCC) pigment in an amount of 10 - 70 wt%, as calculated on the total weight of said intermediate layer, and
- wherein said base ply and said top ply are paperboard plies comprising at least 50wt% cellulose fibers calculated on the total weight of said ply.

14. A method according to claim13, wherein the mixture comprising pigments and microfibrillated cellulose is applied on the surface of said base ply by use of a non-impact application method

15. A method according to claim 14, wherein the non-impact application method is curtain coating or spray coating.

16. A method according to any one of claims13 - 15, wherein the mixture comprising pigments and microfibrillated cellulose is applied on the base ply when said base ply has a solid content of between 1 - 60 wt%.

## Patentansprüche

1. Deckenpapier, das mindestens eine Basisschicht, eine obere Schicht und eine Zwischenschicht umfasst, die zwischen der mindestens einen Basisschicht und der oberen Schicht aufgebracht ist, wobei die Basisschicht und die obere Schicht Kartonschichten sind, die mindestens 50 Gew.-% Cellulosefasern, berechnet auf das Gesamtgewicht der Schicht, umfassen, wobei die Zwischenschicht mikrofibrillierte Cellulose (MFC) in einer Menge von 30-90 Gew.-% und gefälltes Calciumcarbonat(PCC)-Pigment in einer Menge von 10-70 Gew.-% umfasst, wie basierend auf dem Gesamtgewicht der Zwischenschicht berechnet, wobei das Pigment Pigmentpartikel umfasst, wobei 85 Vol.-% der Pigmentpartikel einen Durchmesser von weniger als 5 µm aufweisen.

2. Deckenpapier nach Anspruch 1, wobei die Zwischenschicht ferner ein Co-Bindemittel umfasst, wobei das Co-Bindemittel ein wasserlösliches Polymer umfasst.

3. Deckenpapier nach Anspruch 2, wobei die Zwischenschicht das Co-Bindemittel in einer Menge von 0-10 Gew.-%, berechnet basierend auf dem Gesamtgewicht der Zwischenschicht, umfasst.

4. Deckenpapier nach einem der vorhergehenden Ansprüche, wobei das Flächengewicht der Zwischenschicht im Bereich von 0,1-30 g/m² liegt.

5. Deckenpapier nach einem der vorhergehenden Ansprüche, wobei das Pigment PCC-MFC-Komplexe umfasst, die durch PCC gebildet werden, das auf Fasern oder Fibrillen der mikrofibrillierten Cellulose gefällt wird.

6. Deckenpapier nach einem der vorhergehenden Ansprüche, wobei das Pigment PCC-Stärke-Komplexe umfasst, in denen das PCC auf Stärkegranulaten gefällt wird.

7. Deckenpapier nach einem der Ansprüche 5 oder 6, wobei die BET-spezifische Oberfläche der Pigmentkomplexe über 5 m²/g gemäß ISO 9277 liegt.

8. Deckenpapier nach einem der vorhergehenden Ansprüche, wobei die mindestens eine Basisschicht 50-100 Gew.-% ungebleichten chemischen Zellstoff und 50-100 Gew.-% ungebleichten CTMP-Zellstoff oder wiederverwerteten Zellstoff umfasst, wobei die obere Schicht 100 Gew.-% gebleichten Zellstoff aus Hartholz- oder Weichholzfasern umfasst, wobei alle Prozentangaben auf das Gesamtgewicht der Schicht berechnet sind.

9. Deckenpapier nach einem der Ansprüche 10-11, wobei das Flächengewicht der oberen Schicht unter 60 g/m² liegt.

10. Deckenpapier nach Anspruch 12, wobei das Deckenpapier eine Helligkeit von mindestens 70 %, gemessen nach ISO2470-1, aufweist.

11. Deckenpapier nach einem der vorhergehenden Ansprüche, wobei das Deckenpapier eine White-Top-Marmorierung von weniger als 0,9 % aufweist.

12. Wellfaserpappe, die ein Deckenpapier nach einem der Ansprüche 1-9 und einen Wellenstoff umfasst.

13. Verfahren zur Herstellung eines Deckenpapiers, umfassend die folgenden Schritte:
- Bilden einer Basisschicht;
- Aufbringen einer Mischung, die gefälltes Calciumcarbonat(PCC)-Pigment, das Pigmentpartikel umfasst, von denen 85 Vol.-% einen Durchmesser von weniger als 5 µm aufweisen, und mikrofibrillierte Cellulose auf der Oberfläche der Basisschicht umfasst, wodurch eine Zwischenschicht gebildet wird;
- Aufbringen einer oberen Schicht auf die Oberfläche der Zwischenschicht,
- wobei die gebildete Zwischenschicht die mikrofibrillierte Cellulose in einer Menge von 30-90 Gew.-% und das gefällte Calciumcarbonat-Pigment (PCC) in einer Menge von 10-70 Gew.-%, berechnet basierend auf dem Gesamtgewicht der Zwischenschicht, umfasst, und
- wobei die Basisschicht und die obere Schicht Kartonschichten sind, die mindestens 50 Gew.-% Cellulosefasern umfassen, berechnet basierend auf dem Gesamtgewicht der Schicht.

14. Verfahren nach Anspruch 13, wobei die Mischung, die Pigmente und mikrofibrillierte Cellulose umfasst, unter Verwendung eines kontaktlosen Auftragsverfahrens auf die Oberfläche der Basisschicht aufgebracht wird.

15. Verfahren nach Anspruch 14, wobei das kontaktlose Auftragsverfahren eine Vorhangbeschichtung oder eine Sprühbeschichtung ist.

16. Verfahren nach einem der Ansprüche 13-15, wobei die Mischung, die Pigmente und mikrofibrillierte Cellulose umfasst, auf die Basisschicht aufgebracht wird, wenn die Basisschicht einen Feststoffgehalt zwischen 1-60 Gew.-% aufweist.

## Revendications

1. Carton doublure comprenant au moins un pli de fond, un pli de sommet et une couche intermédiaire appliquée entre l'au moins un pli de fond et ledit pli de sommet, dans lequel ledit pli de fond et ledit pli de sommet sont des plis de carton comprenant au moins 50 % en poids de fibres de cellulose calculées sur le poids total dudit pli, dans lequel la couche intermédiaire comprend de la cellulose microfibrillée (MFC) en une quantité de 30 à 90 % en poids, et le pigment de carbonate de calcium précipité (PCC) en une quantité de 10 à 70 % en poids, calculé sur le poids total de ladite couche intermédiaire, lequel pigment comprend des particules de pigment, dans lequel 85 % en volume des particules de pigment ont un diamètre inférieur à 5 µm.

2. Carton doublure selon la revendication 1, dans lequel la couche intermédiaire comprend en outre un co-liant, lequel co-liant comprend un polymère hydrosoluble.

3. Carton doublure selon la revendication 2, dans lequel la couche intermédiaire comprend le co-liant en une quantité de 0 à 10 % en poids telle que calculée sur le poids total de ladite couche intermédiaire.

4. Carton doublure selon l'une quelconque des revendications précédentes, dans lequel le grammage de la couche intermédiaire est dans la plage de 0,1 à 30 g/m².

5. Carton doublure selon l'une quelconque des revendications précédentes, dans lequel le pigment comprend des complexes PCC-MFC formés par le PCC qui sont précipités sur des fibres ou des fibrilles de la cellulose microfibrillée.

6. Carton doublure selon l'une quelconque des revendications précédentes, dans lequel le pigment comprend des complexes PCC-amidon dans lesquels le PCC est précipité sur des granules d'amidon.

7. Carton doublure selon l'une quelconque des revendications 5 ou 6, dans lequel la surface spécifique BET des complexes de pigments est supérieure à 5 m²/g selon la norme ISO 9277.

8. Carton doublure selon l'une quelconque des revendications précédentes, dans lequel l'au moins un pli de fond comprend 50 à 100 % en poids de pâte chimique non blanchie et 50 à 100 % en poids de pâte CTMP non blanchie ou de pâte recyclée et dans lequel le pli de sommet comprend 100 % en poids de pâte chimique blanchie de fibres de bois feuillus ou de bois résineux, tous les pourcentages étant calculés sur le poids total dudit pli.

9. Carton doublure selon l'une quelconque des revendications 10 et 11, dans lequel le grammage du pli de sommet est inférieur à 60 g/m².

10. Carton doublure selon la revendication 12, lequel carton doublure présente une brillance d'au moins 70 % mesurée selon la norme ISO2470-1.

11. Carton doublure selon l'une quelconque des revendications précédentes, lequel carton doublure présente un marbrage de sommet blanc inférieur à 0,9 %.

12. Panneau de fibres ondulé comprenant un carton doublure selon l'une quelconque des revendications 1 à 9 et un support ondulé.

13. Procédé pour produire un carton doublure comprenant les étapes suivantes :
- la formation d'un pli de fond ;
- l'application d'un mélange comprenant un pigment de carbonate de calcium précipité (PCC) comprenant des particules de pigment dont 85 % en volume ont un diamètre inférieur à 5 µm et de la cellulose microfibrillée sur la surface dudit pli de fond formant une couche intermédiaire ;
- l'application d'un pli de sommet sur la surface de la couche intermédiaire
- dans lequel la couche intermédiaire formée comprend la cellulose microfibrillée en une quantité de 30 à 90 % en poids, et le pigment de carbonate de calcium précipité (PCC) en une quantité de 10 à 70 % en poids, telle que calculée sur le poids total de ladite couche intermédiaire, et
- dans lequel ledit pli de fond et ledit pli de sommet sont des plis de carton comprenant au moins 50 % en poids de fibres de cellulose calculées sur le poids total dudit pli.

14. Procédé selon la revendication 13, dans lequel le mélange comprenant des pigments et de la cellulose microfibrillée est appliqué sur la surface dudit pli de fond en utilisant un procédé d'application sans impact.

15. Procédé selon la revendication 14, dans lequel le procédé d'application sans impact est un revêtement par application au rideau ou par pulvérisation.

16. Procédé selon l'une quelconque des revendications 13 à 15, dans lequel le mélange comprenant des pigments et de la cellulose microfibrillée est appliqué sur le pli de fond lorsque ledit pli de fond a une teneur en matières solides d'entre 1 et 60 % en poids.
